Europäisches Patentamt

European Patent Office

Office européen des brevets

(11) Veröffentlichungsnummer: **0 326 902**

**A1**

(12) **EUROPÄISCHE PATENTANMELDUNG**

(21) Anmeldenummer: 89101138.9

(22) Anmeldetag: 23.01.89

(51) Int. Cl.⁴: **F04F 5/46 , F02G 5/02 , F01P 5/10 , F22B 1/18**

(30) Priorität: 04.02.88 DE 8801398 U

(43) Veröffentlichungstag der Anmeldung:
09.08.89 Patentblatt 89/32

(84) Benannte Vertragsstaaten:
AT BE CH DE ES FR GB IT LI LU NL SE

(71) Anmelder: **INTERATOM Gesellschaft mit beschränkter Haftung**
**Friedrich-Ebert-Strasse**
**D-5060 Bergisch-Gladbach 1(DE)**

(72) Erfinder: **Niemeyer, Wolfgang**
**Albert-Einstein-Strasse 7**
**D-5060 Bergisch Gladbach 1(DE)**
Erfinder: **Pütz, Heinrich**
**Wellerscheid 2**
**D-5203 Much(DE)**

(74) Vertreter: **Mehl, Ernst, Dipl.-Ing. et al**
**Postfach 22 13 17**
**D-8000 München 22(DE)**

(54) **Pulsierende Dampfstrahlpumpe mit Wärmespeicher.**

(57) Eine Erhöhung der Frequenz und damit der Leistung, mit der eine pulsierende Dampfstrahlpumpe betrieben werden kann, wird dadurch erzielt, daß die Dauer des Kollaps der Dampfblase am Ende der Arbeitsphase verkürzt wird. Hierzu ist das Pumprohr in dem hierfür geeigneten Bereich mit einer Auskleidung (6) aus einem Werkstoff mit hohem Wärmeleit- und -speichervermögen versehen. Die Wärmeabgabe aus der Dampfblase wird so beschleunigt, andererseits erfolgt mit dieser Wärme eine Vorwärmung der erneut in das Pumprohr strömenden Flüssigkeit. Um andererseits Wärmeverluste an die Umgebung herabzusetzen, ist dieser Bereich des Pumprohres mit einer Isolierung (7) versehen.

FIG 1

EP 0 326 902 A1

Xerox Copy Centre

## Pulsierende Dampfstrahlpumpe mit Wärmespeicher

Die vorliegende Erfindung betrifft eine Dampfstrahlpumpe nach dem Oberbegriff des 1. Anspruchs. Aus der IT-A-1 081 143 ist eine Dampfstrahlpumpe bekannt, die ein sich kegelförmig verjüngendes, mit seinem weiten Ende in die zu pumpende Flüssigkeit ragendes Rohr aufweist, das an seinem anderen Ende beheizt wird; die sich hier bildenden Dampfblasen entweichen periodisch (mit einer Frequenz in der Größenordnung von 50 Hz) aus dem Rohr und schieben dabei die im übrigen das Rohr füllende Flüssigkeit vor sich her, so die Pumpwirkung auslösend. In der wegen ihrer großen Masse im Ganzen verhältnismäßig kühl bleibenden Flüssigkeit kollabiert die Dampfblase und das Pumpenrohr füllt sich erneut mit Flüssigkeit. Für eine derartige Dampfstrahlpumpe wird bevorzugt eine Verwendung zum Umpumpen des Kühlmittels einer Verbrennungskraftmaschine vorgeschlagen, wobei die zur Beheizung des Pumpenrohres erforderliche Wärme den Abgasen entnommen wird. Hierzu ragt dieses mit seinem dünnen Ende, das mit den Wärmeübergang verbessernden Mitteln wie Rippen versehen ist, in die Abgasleitung hinein.

Eine Erhöhung der Pumpfrequenz und damit auch der -leistung ließe sich erzielen,. wenn das Zusammenfallen der Dampfblase gegenüber dem oben genannten Stand der Technik, bei dem der Wärmeübergang im wesentlichen an die Flüssigkeit erfolgt, beschleunigt werden könnte.

Aufgabe der vorliegenden Erfindung ist die Verbesserung einer Pumpe der genannten Art dadurch, daß das Pumprohr in denjenigen Bereich, in dem der Kollaps der Dampfblase erfolgen soll mit Mitteln versehen wird, die diesen fördern.

Die Lösung dieser Aufgabe erfolgt durch die im kennzeichnenden Teil des 1. Anspruchs genannten Mittel. Nehmen die Wandungen des Pumprohres in dem gewünschten Bereich schnell größere Wärmemengen auf, erfolgt das Zusammenfallen der Dampfblase sehr viel schneller als bisher. Andererseits erfolgt durch die Wiederabgabe der hier gespeicherten Wärme an die erneut in das Pumpenrohr einströmende Flüssigkeit eine gewisse Vorwärmung derselben.

In weiterer Ausgestaltung der Erfindung ist der Teil der Rohrwandung, der das erhöhte Wärmeleit- und -speichervermögen aufweist an seiner Außenseite mit einer Wärmeisolierung versehen, um die dem Prozeß verlorengehenden Wärmemengen möglichst gering zu halten.

Ein Ausführungsbeispiel der Erfindung ist in der Zeichnung dargestellt, und zwar zeigt

Figur 1 die eigentliche Pumpe im Längsaxialschnitt und

Figur 2 die Verschaltung derselben im Flüssigkeitskreislauf.

Die Pumpe besteht aus einem sich konisch verjüngenden Rohr 1, das an seinem engen Enden mit Rippen 2 versehen ist und hiermit in einer Leitung 3 angeordnet ist, in der ein Heizfluid, z. B. die Abgase einer Verbrennungskraftmaschine in der durch die Pfeile angedeuteten Richtung strömt. Die das Rohr 1 füllende Flüssigkeit, z. B. das Kühlwasser eben dieser Verbrennungskraftmaschine wird dadurch bis über den Siedepunkt aufgeheizt, so daß sich schließlich eine Dampfblase bildet, die die Flüssigkeit aus dem Rohr 1 verdrängt. Diese strömt in ein Pumpengehäuse 4 und beschleunigt die dieses füllende Flüssigkeitsmasse in Pfeilrichtung, wodurch der Flüssigkeitskreislauf aufrechterhalten wird. Die Dampfblase kollabiert, sowie sie in den durch die zu pumpende Flüssigkeit auf einem verhältnismäßig kühlen Temperaturniveau gehaltenen Bereich nahe dem weiten Ende des Pumprohres 1 gelangt. Ein Entweichen der Dampfblase ohne daß eine nennenswerte Pumpwirkung auftritt, z. B. indem sich erstere infolge ihrer geringen Größe nur an der Oberseite des erweiterten Bereichs befindet, während an dessen Unterseite ein Gegenstrom von Flüssigkeit erfolgt, wird durch das Vorhandensein eines Verdrängungskörpers 5 verhindert. Der Vorgang des Zusammenfallens der Dampfblase wird dadurch unterstützt, daß sowohl der Verdrängungskörper 5 als auch eine die Außenseiten des erweiterten Bereichs abdeckende Schicht 6 aus einem Material mit hohem Wärmespeichervermögen, z. B. aus Kupfer hergestellt sind. Die Körper 5, 6 befinden sich durch die Benetzung mit der zu fördernden Flüssigkeit zunächst auf einem verhältnismäßig niedrigen Temperaturniveau; wird die Flüssigkeit durch die Dampfblase verdrängt, entziehen diese Körper 5, 6 derselben eine erhöhte Wärmemenge, wodurch die Kondensation beschleunigt wird. Strömt dann erneut Flüssigkeit ein, entzieht diese den Körpern 5, 6 die zuvor aufgenommene Wärme. Eine Isolierschicht 7 verhindert einen erhöhten Wärmeaustausch mit der Umgebung.

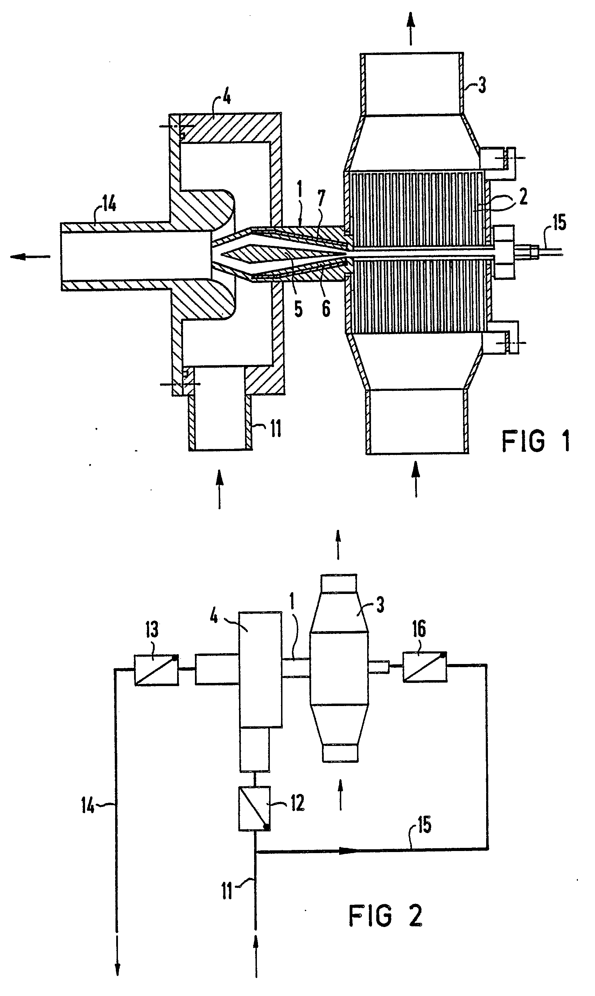

Der Zustrom der Flüssigkeit zur Pumpe 4 erfolgt (siehe Figur 2) über eine Leitung 11, in die ein erstes Rückschlagventil 12 eingebaut ist, das sicherstellt, daß durch die Verdrängung der Flüssigkeit aus dem Pumpenrohr 1 keine Rückströmung in der Leitung 11 auftritt. Ebenso verhindert ein zweites Rückschlagventil 13 in einer weiteren, dem Abfluß der Flüssigkeit dienenden Leitung 14 den umgekehrten Effekt, nämlich daß in dieser ebenfalls eine Rückströmung eintritt, wenn durch den Kollaps der Dampfblase in Pumpenrohr 1 erneut Flüssigkeit in dieses strömt. Das Wiederauffüllen der Flüssigkeit in dem beheizten Bereich des Pumpenrohres 1 erfolgt zweckmäßigerweise über eine von der Zuleitung 11 abzweigende Umgehungsleitung 15, die in das enge Ende desselben mündet, wobei ein drittes Rückschlagventil 16 dafür sorgt, daß auch hier keine Rückströmung eintreten kann, etwa durch den Druck der sich bildenden Dampfblase.

**Ansprüche**

1. Pulsierende Dampfstrahlpumpe mit einem kegelförmig sich verjüngenden Pumprohr, das mit seinem offenen weiten Ende in eine Leitung (4, 14) für die zu pumpende Flüssigkeit ragt, **dadurch gekennzeichnet**, daß mindestens ein Teil der das Pumprohr begrenzenden Flächen (6) aus einem Werkstoff mit hohen Wärmeleit- und -speichervermögen besteht.

2. Pumpe nach Anspruch 1, **dadurch gekennzeichnet**, daß das Pumprohr (1) mindestens auf einem Teil seiner Länge mit einer Wärmeisolierung (7) versehen ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | SU-A- 981 706 (KHARK AVIATION)<br>* Das ganze Dokument *<br>--- | 1 | F 04 F 5/46<br>F 02 G 5/02<br>F 01 P 5/10<br>F 22 B 1/18 |
| A | DE-C- 583 792 (LOEWENSTEIN)<br>* Seite 3, Zeilen 28-61; Figuren *<br>--- | 1 | |
| A | DE-C- 376 556 (METZGER)<br>----- | | |

RECHERCHIERTE SACHGEBIETE (Int. Cl.4)

F 04 F
F 01 P
F 01 K
F 02 G
F 22 B
F 22 D

Der vorliegende Recherchenbericht wurde für alle Patentansprüche erstellt

| Recherchenort | Abschlußdatum der Recherche | Prüfer |
|---|---|---|
| DEN HAAG | 30-03-1989 | VAN GHEEL J.U.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)